# EUROPÄISCHE PATENTSCHRIFT

(11) **EP 1 672 445 B1**
(45) Veröffentlichungstag und Bekanntmachung des Hinweises auf die Patenterteilung: **19.03.2008**
(21) Anmeldenummer: 04030187.1
(22) Anmeldetag: 20.12.2004
(51) Int. Cl.: G05B 19/042, G08C 19/28, H04B 1/20

(54) **HMI System mit einem mobilen Bedien- und Beobachtungsgerät für sicherheitsrelevante Bedienungen an einer technischen Anlage**
HMI system with a mobile operating and monitoring device for operations critical to safety of a technical installation
Système d'interface homme-machine avec un dispositif d'operation et de surveillance pour des operations relatives à la sécurité d'une installation technique

(43) Veröffentlichungstag der Anmeldung: 21.06.2006
(73) Patentinhaber: SIEMENS AKTIENGESELLSCHAFT, 80333 München (DE)
(72) Erfinder: Baumgartner, Josef, 1160 Wien (AT); Gila, Janos, Dr., 2340 Mödling (AT); Konrad, Wolfgang, Dr., 2340 Mödling (AT); Rieger, Gottfried, 90766 Fürth (DE); Sinn, Ulrich, 91056 Erlangen (DE); Skuk, Oskar, 1180 Wien (AT)

(56) Entgegenhaltungen:
- EP-A- 1 501 062
- WO-A-00/02344
- DE-A1- 10 317 139
- DE-A1- 19 734 312
- US-A- 6 084 512

## Beschreibung

Die Erfindung betrifft ein HMI System mit zumindest einem mobilen Bedien- und Beobachtungsgerät, sowie ein mobiles Bedien- und Beobachtungsgerät für die Automatisierungskomponenten einer technischen Anlage.

Technische Anlagen sind alle Arten von technischen Geräten und Systemen sowohl in Einzelanordnung als auch in datentechnischer Vernetzung z.B. über einen Feldbus. Bei industriellen Anwendungen fallen darunter einzelne Betriebsmittel, z.B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z.B. eine chemische Anlage oder Fertigungsstra-ße. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet. Zur Entlastung dieser Steuerungen weisen Automatisierungen weitere spezielle Geräte auf, welche eine Schnittstelle für Bedienpersonal bilden. Diese werden als Geräte zum "Bedienen- und Beobachten", abgekürzt "B+B", oder als HMI Geräte, d.h. Human Machine Interface, bezeichnet.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. Diese können stationär oder mobil ausgeführt sein. HMI Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Vielfach sind die HMI Geräte z.B. in Form von Terminals als stationäre Komponenten in ein Automatisierungssystem fest integriert. Derartige Terminals sind dann in der Regel fest über Kabelverbindungen mit dem Automatisierungssystem verbunden. Sind diese Terminals als Hand-Held Geräte ausgeführt, so ist deren Aktionsradius durch ein Anschlusskabel beschränkt. Hierdurch ist es in vielen Fällen gewährleistet, dass eine Bedienperson sicherheitsrelevante Bedienungen nur in unmittelbarer Nähe der technischen Anlage oder zumindest unter Einhaltung eines ausreichenden Sichtkontaktes vornehmen kann.

Anders ist dagegen die Situation, wenn ein HMI Gerät in Form eines mobilen Operators Panels ausgeführt ist. Ein solches mobiles Bedien- und Beobachtungsgerät kann z.B. über eine Funkstrecke mit dem Automatisierungssystem verbunden sein, die eine große Reichweite aufweist. So ist es in einem solchen Fall nicht ausgeschlossen, dass sich eine Bedienperson, die ein mobiles Bedien- und Beobachtungsgerät benutzt, sich so weit von einer dazugehörigen technischen Anlage entfernt, dass sicherheitsrelevante Bedienungen aus einer an sich unzulässigen Entfernung vorgenommen werden. In einem solchen Fall wäre dann die Personensicherheit nicht gewährleistet.

EP 1 501 062 A1 zeigt ein Verfahren und HMI System zur Bedienung und Beobachtung einer technischen Anlage. Gemäß dem in diesem Dokument beschriebenen Verfahren wird die aktuelle Position eines mobilen Bedien- und Beobachtungsgeräts mit Hilfe von Ortungssignalen bestimmt. Dabei werden nach einer Ausführungsform Ortungssignale ausgewertet, die von einem Satellitensystem, insbesondere von einem GPS Satellitensystem stammen. Alternativ werden vom mobilen Bedien- und Beobachtungsgerät zur Positionsbestimmung Nahwirkungsfelder empfangen und ausgewertet. Bei den Nahwirkungsfeldern handelt es sich insbesondere um elektromagnetische Felder von benachbarten HMI Kommunikationsmodulen, die an der Anlage angebracht sind. Nach einer weiteren Ausführungsform werden Abstrahlungen des mobilen Bedien- und Beobachtungsgeräts von benachbarten HMI Kommunikationsmodulen empfangen und von diesen, an der technischen Anlage angebrachten Kommunikationsmodulen, zur Positionsbestimmung des mobilen Bedien- und Beobachtungsmoduls ausgewertet.

Zur Vermeidung einer Steuerung des Automatisierungssystems durch das mobile Bedien- und Beobachtungsgerät aus einer unzulässigen Entfernung ist es vorteilhaft, das Bedien- und Beobachtungsgerät zu lokalisieren und abhängig von seiner Position sicherheitsrelevante Bedienungen der technischen Anlage freizugeben oder zu deaktivieren. Hierzu kann das HMI System mit Auswertemitteln zur Verwaltung eines aktiven Bedienbereichs um die technische Anlage herum ausgestaltet werden. Die Lokalisierungsmittel werten den Abstand des mobilen Bedien- und Beobachtungsgeräts von der technischen Anlage aus, um detektieren zu können, ob sich das mobile Bedien- und Beobachtungsgerät innerhalb des aktiven Bedienbereichs befindet. Die hierfür erforderliche Abstandsmessung kann dabei z.B. mit Hilfe einer berührungslosen Datenübertragungsstrecke erfolgen, welche die Automatisierungskomponenten und das mobile Bedien- und Beobachtungsgerät datentechnisch miteinander verbinden. Für die Lokalisierung des mobilen Bedien- und Beobachtungsgeräts sind typischerweise eine Anzahl von Zusatzgeräten erforderlich, die an vordefinierten Referenzpunkten der technischen Anlage angebracht sind.

Diese Zusatzgeräte, die auch als TAG bezeichnet werden, sind zur berührungslosen Datenübertragung mit dem mobilen Bedien- und Beobachtungsgerät ausgebildet. Jedes dieser TAGs verfügt daher über eine Sende- und eine Empfangseinheit und über eine lokale Signalverarbeitung, um die von dem mobilen Bedien- und Beobachtungsgerät empfangenen Daten zu verarbeiten und an die Automatisierungskomponenten zwecks Positionsbestimmung des mobilen Bedien- und Beobachtungsgeräts weiterzuleiten. Somit kann eine Positionsbestimmung des mobilen Bedien- und Beobachtungsgeräts mit Hilfe der Automatisierungskomponenten durchgeführt werden und den Auswertemitteln zur Verwaltung des aktiven Bedienbereichs der technischen Anlage zur Verfügung gestellt werden.

Da das mobile Bedien- und Beobachtungsgerät strengen Anforderungen hinsichtlich seiner Bauteilgröße unterliegt, ist es zweckmäßig, die Abstandsmessung mit Hilfe der TAGs und der Automatisierungskomponenten durchzuführen. Dies erfordert jedoch eine kostenintensive und komplexe Realisierung der einzelnen TAGs sowie die Implementierung eines Datenaustauschs zwischen den TAGs und den Automatisierungskomponenten einerseits und der Übermittlung von Positionsdaten zwischen den Automatisierungskomponenten und dem mobilen Bedien- und Beobachtungsgerät andererseits.

Der Erfindung liegt somit die Aufgabe zu Grunde, ein HMI System so weiter zu gestalten, dass eine Lokalisierung des mobilen Bedien- und Beobachtungsgeräts im mobilen Bedien- und Beobachtungsgerät selbst implementiert ist, so dass die Komplexität der TAGs verringert werden kann und ein Austausch von Lokalisierungsdaten zwischen den TAGs und den Automatisierungskomponenten nicht mehr erforderlich ist.

Die Aufgabe wird mit dem im Anspruch 1 angegebenen HMI System gelöst. Weitere vorteilhafte Ausführungen der Erfindung sind in den Unteransprüchen angegeben.

Das HMI System verfügt über zumindest ein mobiles Bedien- und Beobachtungsgerät für die Automatisierungskomponenten einer technischen Anlage. Es weist Mittel zur berührungslosen Datenübertragung zwischen dem mobilen Bedien- und Beobachtungsgerät und den Automatisierungskomponenten, und Mittel zur Lokalisierung des mobilen Bedien- und Beobachtungsgeräts auf. Das mobile Bedien- und Beobachtungsgerät verfügt ferner über Sendemittel und Empfangsmittel zur drahtlosen Lokalisierung sowie eine Auswerteeinheit zur Bestimmung eines Abstands zwischen dem mobilen Bedien- und Beobachtungsgerät und der technischen Anlage. Weiterhin sind Auswertemittel zur Verwaltung eines aktiven Bedienbereichs vorhanden, welcher die Automatisierungskomponenten für sicherheitsrelevante Bedienungen der technischen Anlage über das mobile Bedien- und Beobachtungsgerät nur dann aktivieren, wenn die Lokalisierungsmittel detektieren, dass sich das mobile Bedien- und Beobachtungsgerät innerhalb eines aktiven Bereichs befindet.

Das erfindungsgemäße HMI System hat den Vorteil, dass eine Auswertung von Signalen zur Lokalisierung des mobilen Bedien- und Beobachtungsgeräts im mobilen Bedien- und Beobachtungsgerät durchgeführt wird. Daher kann darauf verzichtet werden, eine entsprechende Signalauswertung mit Hilfe von TAGs durchzuführen, die an verschiedenen Positionen an der technischen Anlage angebracht sind. Eine entsprechende Datenkommunikation von Lokalisierungsdaten zwischen mindestens einem TAG und den Automatisierungskomponenten des HMI Systems ist daher nicht erforderlich und ermöglicht eine Kosten einsparende Vereinfachung der TAGs einerseits und eine Verringerung der Komplexität der Datenkommunikationsinfrastruktur des HMI Systems andererseits.

Da für die Lokalisierung des mobilen Bedien- und Beobachtungsgeräts typischerweise eine Sichtverbindung zwischen mindestens einem, an der technischen Anlage angebrachten, TAG und dem mobilen Bedien- und Beobachtungsgerät benötigt wird, kann es, abhängig von der jeweiligen Einsatzumgebung, zweckmäßig sein, eine Vielzahl von TAGs an unterschiedlichen Positionen an der technischen Anlage anzubringen. Eine Kosten- und Komplexitätsminimierung der TAGs ist daher für das HMI System von großer Bedeutung. Ein weiterer Vorteil besteht darin, dass mit dem erfindungsgemäßen HMI System keine Lokalisierungssignale oder Lokalisierungsdaten von den TAGs verarbeitet werden müssen und diese auch nicht an die Automatisierungskomponenten übertragen werden müssen. Dies ermöglicht eine Implementierung, bei der zwischen einzelnen TAGs und den Automatisierungskomponenten, sowie zwischen dem mobilen Bedien- und Beobachtungsgerät keine zur Lokalisierung des mobilen Bedien- und Beobachtungsgerät relevanten Daten übermittelt werden müssen.

Die Signale zur Lokalisierung des mobilen Bedien- und Beobachtungsgeräts werden vom mobilen Bedien- und Beobachtungsgerät selbst erzeugt und ausgesendet. Vorzugsweise werden reflektierte Lokalisierungssignale, die von der technischen Anlage reflektiert werden vom mobilen Bedien- und Beobachtungsgerät empfangen und ausgewertet. Zudem können die Sendemittel und Empfangsmittel zum Senden und Empfangen von Lokalisierungssignalen, sowie die Auswertemittel zur Lokalisierung des mobilen Bedien- und Beobachtungsgeräts nahezu unter Beibehaltung des Raumbedarfs des mobilen Bedien- und Beobachtungsgeräts implementiert werden. Trotz einer komplexeren Funktionalität kann das mobile Bedien- und Beobachtungsgerät somit den stringenten Anforderungen hinsichtlich der Bauteilgröße und Bauteilkosten entsprechen.

Gemäß der Erfindung sind die Sendemittel und Empfangsmittel des mobilen Bedien- und Beobachtungsgeräts zum Senden und Empfangen von Radarsignalen ausgebildet und die technische Anlage verfügt über mindestens ein Reflektormodul zur Reflexion von Radarsignalen. Vorzugsweise verfügt die technische Anlage über mehrere Reflektormodule, so dass bei einer beliebigen Position des mobilen Bedien- und Beobachtungsgeräts eine Sichtverbindung zu mindestens einem Reflektormodul der technischen Anlage besteht. Die Reflektormodule entsprechen den TAGs und sind an vordefinierten, dem HMI System bekannten, Referenzpunkten an der technischen Anlage angebracht. Die vom mobilen Bedien- und Beobachtungsgerät ausgesendeten und vom Reflektormodul reflektierten Radarsignale werden vom mobilen Bedien- und Beobachtungsgerät empfangen und zur Lokalisierung desselbigen ausgewertet. Nach erfolgter Lokalisierung des mobilen Bedien- und Beobachtungsgeräts werden daraus resultierende Abstands- und / oder Positionsdaten den Auswertemitteln zur Verwaltung des aktiven Bedienbereichs zur Verfügung gestellt.

Bei einer anderen Ausführungsform der Erfindung sind die Sendemittel und Empfangsmittel zur Lokalisierung des mobilen Bedien- und Beobachtungsgeräts als Frequenz modulierendes Dauerstrich-Radarsystem ausgebildet. Ein solches Radarsystem, auch als Frequency Modulated Continous Wave (FMCW) Radar bezeichnet, ermöglicht eine Abstandsbestimmung zu einem reflektierenden Objekt unter Verwendung von kontinuierlicher, das heißt nicht gepulster sondern continuous wave (CW), Radarstrahlung. Hierbei unterliegt die Frequenz der ausgesendeten Radarsignale einer periodischen Modulation. Da sich die Sendefrequenz des Radarsignals kontinuierlich ändert, weisen ausgesendete und vom Objekt reflektierte Radarsignale eine Frequenzverschiebung auf, die einen Laufzeitunterschied widerspiegelt. Dieser Laufzeitunterschied entspricht dem zweifachen Abstand zwischen dem mobilen Bedien- und Beobachtungsgerät und dem reflektierenden Objekt. Somit kann mit Hilfe des FMCW-Prinzips die Entfernung bzw. die relative Position zu einem stationären Objekt zuverlässig bestimmt werden.

Bei einer weiteren Ausführungsform des erfindungsgemäßen HMI Systems ist das mindestens ein Reflektormodul zum Empfangen von Radarsignalen, zum Modulieren von empfangenen Radarsignalen und zum Senden von modulierten Radarsignalen ausgebildet. Die von den Reflektormodulen, oder TAGs, durchführbare Modulation wird autonom von dem jeweiligen TAG durchgeführt und nicht von den Automatisierungskomponenten des HMI Systems gesteuert. Die Modulation eines von einem Reflektor reflektierten Radarsignals ermöglicht eine Differenzierung zwischen Radarsignalen, die von den Reflektormodulen reflektiert werden und Radarsignalen, die von anderen, beliebigen Objekten reflektiert werden und die daher einen für die Lokalisierung störenden Hintergrund darstellen. Die TAGs oder Reflektormodule sind vorzugsweise zu einer Subträger-Modulation der Radarsignale ausgebildet, d.h. eine vordefinierte Offsetfrequenz wird dem antreffenden Radarabfragesignal zugefügt.

Der Empfänger des mobilen Bedien- und Beobachtungsgeräts ist auf die Modulation des Reflektormoduls abgestimmt, so dass aus der Menge von reflektierten Radarsignalen nur solche mit einer von den Reflektormodulen aufgeprägten Modulation selektiv ausgewertet werden können. Die Reflektormodule haben daher einen Transponderfunktionalität, indem sie auf ein vom mobilen Bedien- und Beobachtungsgerät ausgesendetes und empfangenes Abfragesignal hin ein moduliertes Funkantwortsignal aussenden.

Bei einer weiteren Ausführungsform des erfindungsgemäßen HMI Systems ist das mindestens eine Reflektormodul zur Modulation von Radarsignalen ausgebildet. Diese Modulation kann beliebig als Phasen- und / oder Amplitudenmodulation implementiert sein. So kann z.B. die Phasenmodulation insbesondere durch eine Phase Shift Keying Modulation, wie z. B. eine Binary Phase Shift Keying (BPSK), eine Quadrature Phase Shift Keying (QPSK), 8-PSK oder 16-PSK Modulation oder allgemein durch eine M-way Phase Shift Keying (MPSK) Modulation realisiert werden. Beim Binary Phase Shift Keying wechselt die Phase zwischen 0° und 180°. Vorzugsweise liegt die Frequenz dieser binären Modulation im KHz- bis MHz -Bereich, wenn das Trägersignal im GHz-Bereich liegt.

Bei einer weiteren vorteilhaften Ausführungsform des erfindungsgemäßen HMI Systems verfügt das mobile Bedien- und Beobachtungsgerät über einen Mischer, der dazu ausgebildet ist, ein reelles Signal aus einem empfangenen Radarsignal zu erzeugen. Dieses reelle Signal liegt auf einer Zwischenfrequenz, deren Frequenz der Modulationsfrequenz entspricht, die vom Reflektormodul dem reflektierten Radarsignal aufgeprägt wird. Damit ist der Empfänger des mobilen Bedien- und Beobachtungsgeräts als reeller Empfänger ausgebildet, so dass lediglich der Realteil eines empfangenen Radarsignals zur Lokalisierung des mobilen Bedien- und Beobachtungsgeräts verwertet wird. Unter Verwendung des FMCW-Prinzips und der im Regelfall gültigen Annahme, dass das Reflektormodul und das mobile Bedien- und Beobachtungsgerät während einer Signalübermittlung stationär sind, erlaubt die reelle Auswertung empfangener Radarsignale eine Abstands- bzw. Positionsbestimmung zwischen mobilem Bedien- und Beobachtungsgerät und einem, an der technischen Anlage angebrachten Reflektormodul.

Die Implementierung der reellen Radarsignal-Auswertung ermöglicht eine wesentliche Verringerung der Bauteilgröße und Bauteilkosten im Vergleich zu einer komplexen Auswertung, die eine I/Q Demodulation des empfangenen Radarsignals erfordert. Daher kann durch den Einsatz eines reellen Empfängers und einer reellen Auswerteeinheit eine, für das mobile Bedien- und Beobachtungsgerät erforderliche Bauteilgrößen Begrenzung eingehalten werden. Zudem ermöglicht die reelle Implementierung der Empfangsmittel und Auswertemittel des mobilen Bedien- und Beobachtungsgeräts eine Kosteneinsparung.

Bei einer weiteren Ausführungsform des erfindungsgemäßen HMI Systems verfügt das mobile Bedien- und Beobachtungsgerät über eine Analyse Einheit, die zur Bestimmung eines Abstands zur technischen Anlage mittels Frequenzanalyse des empfangenen Radarsignals ausgebildet ist. Die Frequenzanalyse basiert vorzugsweise auf einer Fast Fourier Transform (FFT) Prozedur. Somit können die unterschiedlichen spektralen Anteile und damit unterschiedliche Signallaufwege eines empfangenen Radarsignals effizient identifiziert werden. Der Frequenzabstand unterschiedlicher spektraler Anteile des empfangenen Radarsignals ist ein Maß für den Abstand zwischen dem mobilen Bedien- und Beobachtungsgerät und einem Reflektormodul.

Nach einer weiteren vorteilhaften Ausführungsform des erfindungsgemäßen HMI Systems ist das mindestens eine Reflektormodul zum Senden von Identifizierungsdaten ausgebildet und das mobile Bedien- und Beobachtungsgerät ist zur Identifizierung des mindestens einen Reflektormoduls mittels empfangener Identifizierungsdaten ausgebildet. Vorzugsweise werden die Identifizierungsdaten mit Hilfe eines weiteren Modulationsverfahrens den am Reflektormodul reflektierten Radarsignalen aufgeprägt.

Z.B. können Identifizierungsdaten eines Reflektormoduls mittels einer ON/OFF Keying (OOK) Modulation auf reflektierte Radarsignale ausgeprägt werden. Hierbei wird das Subträger-Signal entsprechend den Modulationsbit ein- und ausgeschaltet. Die Identifizierungsdaten können mittels der ON/OFF Keying (OOK) Modulation gemeinsam mit der BPSK Modulation auf empfangene Radarsignale angewendet werden. Die vom mobilen Bedien- und Beobachtungsgerät empfangenen Radarsignale können daher zur Lokalisierung des mobilen Bedien- und Beobachtungsgeräts als auch zur Identifizierung eines Reflektormoduls verwendet werden. Vorzugsweise ist jedes Reflektormodul mit einem individuellen Identifizierungscode versehen, der bei der Reflexion von Radarsignalen in den Radarsignalen aufgeprägt wird. Ein solcher Identifizierungscode kann z.B. mit Hilfe eines Golay-Codes realisiert werden.

Mit Hilfe eines, bei der Reflexion aufgeprägten Identifizierungscodes kann daher der Abstand zu einem bestimmten identifizierten Reflektormodul im mobilen Bedien- und Beobachtungsgerät bestimmt werden. Da die Reflektormodule oder TAGs an bestimmten vordefinierten Referenzpunkten an der technischen Anlage angebracht sind, kann daher bei einer Identifizierung eines reflektierenden Reflektormoduls und der Auswertung der reflektierten Radarsignale die Position bzw. der Abstand des mobilen Bedien- und Beobachtungsgeräts bezogen auf das Reflektormodul bestimmt werden, ohne dass hierfür eine gesonderte Datenübertragung zwischen den TAGs und den Automatisierungskomponenten der technischen Anlage notwendig wären.

Nach einer weiteren vorteilhaften Ausführungsform des erfindungsgemäßen HMI Systems verfügt das mobile Bedien- und Beobachtungsgerät über Mittel zur Analog-Digitalkonvertierung empfangener Radarsignale, welche mittels eines Begrenzerverstärkers in eine binäre Signalfolge überführbar sind. Ein solcher Begrenzerverstärker kann sogar an Stelle eines Analog-Digitalkonverters verwendet werden. Der Begrenzerverstärker liefert ein rechteckförmiges Ausgangssignal an die Auswerteeinheit des mobilen Bedien- und Beobachtungsgeräts. Mit Hilfe des Begrenzerverstärkers oder Limiters wird somit das empfangene analoge Signal in ein rechteckförmiges Signal unter Beibehaltung der Grundwelle des Messsignals überführt. Die spektrale Analyse des rechteckförmigen Ausgangssignals des Begrenzerverstärkers ist für die Abstandsbestimmung nach wie vor geeignet. Der Begrenzerverstärker oder Limiter stellt somit einen 1-Bit Analog-Digitalwandler dar und erlaubt eine Reduzierung von Bauteilkosten, Einbauplatz sowie Stromverbrauch im Vergleich zu einem n-Bit Analog-Digitalwandler. Alternativ zum Begrenzerverstärker kann auch ein zum Beispiel 4 oder 2-Bit Analog-Digitalwandler implementiert werden, von dem nur ein 1-Bit Bereich effektiv genutzt wird.

In einem weiteren Aspekt weist die Erfindung ein mobiles Bedien- und Beobachtungsgerät für Automatisierungskomponenten einer technischen Anlage auf. Das erfindungsgemäße mobile Bedien- und Beobachtungsgerät verfügt über Mittel zur berührungslosen Datenübertragung zwischen dem mobilen Bedien- und Beobachtungsgerät und den Automatisierungskomponenten sowie über Sendemittel und Empfangsmittel zur drahtlosen Lokalisierung des mobilen Bedien- und Beobachtungsgeräts. Ferner verfügt das mobile Bedien- und Beobachtungsgerät über Auswertemittel zur Verwaltung eines aktiven Bedienbereichs, welcher die Automatisierungskomponenten für sicherheitsrelevante Bedienungen der technischen Anlage über das mobile Bedien- und Beobachtungsgerät nur dann aktivieren, wenn die Lokalisierungsmittel detektieren, dass sich das mobile Bedien- und Beobachtungsgerät innerhalb eines aktiven Bereichs befindet.

Bevorzugte Ausführungsformen der Erfindung werden nachfolgend anhand der Zeichnungen näher erläutert. Es zeigen:
- Figur 1: ein schematisches Blockdiagramm des erfindungsgemäßen HMI Systems,
- Figur 2: ein Blockdiagramm eines Lokalisierungsmoduls des mobilen Bedien- und Beobachtungsgeräts.

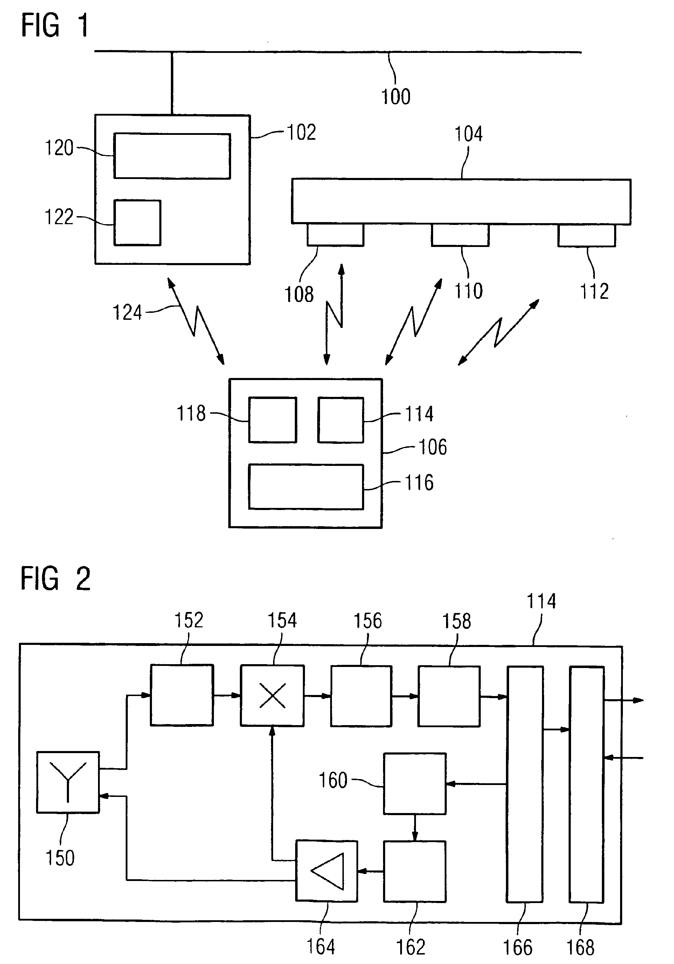

Figur 1 zeigt beispielhaft eine technische Anlage 104 mit technischen Betriebsmitteln, die z.B. Bestandteil einer fertigungs- oder prozesstechnischen Vorrichtung sein können. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens ein Reflektormodul, vorzugsweise über eine Reihe von Reflektormodulen 108, 110, 112, die an verschiedenen Referenzpunkten an der technischen Anlage 104 angebracht sind. Die Reflektormodule oder TAGs sind dazu ausgebildet, die vom Lokalisierungsmodul 114 ausgesendeten Radarsignale zu modulieren und zu reflektieren. Die von den Reflektormodulen 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions.- oder Abstandsbestimmung von den Reflektormodulen 108, 110, 112 selbsttätig durchzuführen. Die Reflektormodule 108, 110, 112 müssen hierbei keine Signalauswertung vornehmen.

Ebenso ist eine Datenübertragung zwischen den Automatisierungskomponenten 102 und den einzelnen Reflektormodulen 108, 110, 112 zur Lokalisierung des mobilen Bedien- und Beobachtungsgeräts 106 nicht nötig. Daher können die einzelnen TAGs 108, 110, 112 sehr robust und kostengünstig in großer Stückzahl hergestellt werden.

Das Lokalisierungsmodul 114 ist vorzugsweise als FMCW-Radar ausgebildet und die einzelnen Reflektormodule 108, 110, 112 sind zur Modulation empfangener Radarsignale und zum Reflektieren daraus resultierender modulierter Radarsignale ausgebildet. Mittels einer von den Reflektormodulen 108, 110, 112 durchgeführten Subträger-Modulation können die von den Reflektormodulen reflektierten Radarsignale selektiv ausgewertet werden. Die Subträger-Modulation ermöglicht somit eine Trennung von Hintergrundsignalen und Signalen, die an den TAGs reflektiert wurden. Durch eine entsprechende Subträger-Filterung im Lokalisierungsmodul 114 kann somit, mit Hilfe eines FMCW-Radars, eine eindeutige Entfernungsmessung für stationäre Ziele sogar mit einem reellen Empfänger im Lokalisierungsmodul 114 realisiert werden. Insbesondere die Implementierung eines reellen Empfängers im Lokalisierungsmodul 114 ermöglicht eine kostengünstige und Platz sparende Realisierung eines Empfängerkonzepts für das erfindungsgemäße HMI System zur Lokalisierung des mobilen Bedien- und Beobachtungsgeräts.

Figur 2 zeigt ein Blockdiagramm des Lokalisierungsmoduls 114 des mobilen Bedien- und Beobachtungsgeräts 106. Das Lokalisierungsmodul 114 verfügt über eine Sende- und Empfangsantenne 150, einen Verstärker 152, einen Mischer 154, einen Filter 156, einen Analog-Digitalwandler 158, ein Kontrollmodul 166, eine Schnittstelle 168, einen Funktionsgenerator 160, einen spannungskontrollierten Oszillator 162 sowie einen Verstärker 164. Das Kontrollmodul 166 wird zur Auswertung der Abstandsmessung, zur Datenkommunikation und zur Kalibrierung verwendet. Das Kontrollmodul 166 ist z.B. als Mikro-Controller ausgebildet und ist mit einer Schnittstelle 168 verbunden, die eine Verbindung zur Auswerteeinheit, dem Ein- und Ausgabemodul 116 und dem Datenübertragungsmodul 118 des mobilen Bedien- und Beobachtungsgeräts 106 herstellt.

Das Kontrollmodul 166 steuert zum einen den Funktionsgenerator 160 und ist ferner zur Auswertung von digitalen Signalen vom Analog-Digitalwandler 158 ausgebildet. Das Kontrollmodul 166 ermöglicht z.B. eine Frequenzanalyse empfangener Signale mittels einer FFT Prozedur.

Der Funktionsgenerator 160 wird vom Kontrollmodul 166 gestartet und legt eine Ausgangsspannung an den spannungskontrollierten Oszillator 162 an. Vorzugsweise ist die Signalform die vom Funktionsgenerator 160 erzeugt wird, ein Dreieck. Der spannungskontrollierte Oszillator, auch als Voltage Controlled Oscillator (VCO) bezeichnet, erzeugt das Sende- und Lokaloszillator-Signal. Abhängig von seiner Eingangsspannung erzeugt der spannungskontrollierte Oszillator 162 ein Ausgangssignal variierender Frequenz. Typischerweise liegt das vom spannungskontrollierten Oszillator 162 erzeugte Signal im GHz-Bereich. Z.B. erzeugt der spannungskontrollierte Oszillator 162 Ausgangssignale innerhalb des ISM-Bandes bei einer Mittenfrequenz um 2,4 GHz.

Das vom spannungskontrollierten Oszillator 162 erzeugte RF-Signal weist typischerweise einen Frequenzhub im Bereich einiger 10 MHz auf bei einer Rampenzeit im ms-Bereich.

Das erzeugte Frequenz modulierende RF-Signal wird vorzugsweise mit Hilfe des Verstärkers 164 auf einen notwendigen Pegel verstärkt und schließlich an das Sende- und Empfangsmodul 150 übermittelt. Von dort wird das RF-Signal ausgesendet. Das Sende- und Empfangsmodul 150 ist typischerweise als Dual Port Antenne ausgebildet und erlaubt eine zeitgleiche Verwendung zum Senden und Empfangen von RF-Signalen. Vorzugsweise strahlt die Antenne in einen Halbraum und ermöglicht somit eine effiziente Nutzung der verfügbaren Leistung. Signale, die von der Antenne 150 empfangen werden, werden vorzugsweise mit Hilfe des Verstärkers 152 verstärkt. Dieser Verstärker 152 kann z.B. als einstufiger Transistorverstärker ausgebildet sein. Die verstärkten empfangenen Radarsignale werden dann mit Hilfe des Mischers 154 auf die Subträger-Frequenz umgesetzt. Diese Subträger-Frequenz entspricht der Modulationsfrequenz der Reflektormodule 108, 110, 112, die vorzugsweise im kHz bis MHz Bereich liegt. Der Mischer liefert ein reelles Ausgangsignal, so dass eine reelle Signalauswertung ermöglicht wird. Demnach kann auf den Einsatz kosten- und platzaufwändiger Komponenten zur komplexen Signalauswertung, wie z.B. I/Q Demodulatoren, verzichtet werden.

Das vom Mischer 154 erzeugte Zwischenfrequenz-Signal enthält die Abstandsinformation zu einem Reflektormodul. Mit Hilfe des Filters 156 und / oder eines entsprechenden Verstärkers wird das Zwischenfrequenz-Signal für die Analog-Digitalwandlung, die mit Hilfe des Analog-Digitalwandlers 158 durchgeführt wird, aufbereitet. Vorteilhafter Weise wird das Zwischenfrequenzsignal derart aufbereitet, dass die Dynamik des Analog-Digitalwandlers 158 optimal ausgenutzt wird. Der Ausgang des Analog-Digitalwandlers 158 ist schließlich an das Kontrollmodul 166 gekoppelt, welches eine Frequenzanalyse zur Abstandsbestimmung durchführt.

Der Analog-Digitalwandler 158 kann ebenso in das Kontrollmodul 166 integriert sein. Alternativ kann anstelle eines z.B. 8-Bit Analog-Digitalwandlers auch ein 2- oder 4-bit Analog-Digitalwandler oder sogar ein Begrenzerverstärker oder Limiter verwendet werden, der eine 1-Bit Signalfolge an das Kontrollmodul 166 liefert. Für die Frequenzanalyse, die vom Kontrollmodul 166 durchgeführt wird, ist lediglich die Grundfrequenz des Signals nicht aber dessen Amplitude von Bedeutung. Lediglich bei der Verwendung einer ON/OFF Keying (OOK) Modulation zur Identifizierung eines Reflektormoduls 108, 110, 112 wäre die Implementierung mittels eines 1-Bit Begrenzerverstärkers nur bedingt geeignet. Für eine reine Abstandsmessung, die mit Hilfe einer BPSK Modulationstechnik durchgeführt werden kann, ist die Implementierung des Analog-Digitalwandlers mit Hilfe eines Begrenzerverstärkers oder Limiters vollkommen ausreichend. Dies ermöglicht wiederum, die Komplexität des Lokalisierungsmoduls 114 sowie dessen Bauteilkosten zu reduzieren.

## Patentansprüche

1. HMI System mit zumindest einem mobilen Bedien- und Beobachtungsgerät (106) für Automatisierungskomponenten (102) einer technischen Anlage (104) und mit
- Mitteln zur berührungslosen Datenübertragung zwischen dem mobilen Bedien- und Beobachtungsgerät und den Automatisierungskomponenten,
- Mitteln zur Lokalisierung des mobilen Bedien- und Beobachtungsgeräts, wobei das mobile Bedien- und Beobachtungsgerät Sendemittel und Empfangsmittel zur drahtlosen Lokalisierung hat,
- Auswertemitteln zur Verwaltung eines aktiven Bedienbereichs, welche die Automatisierungskomponenten für sicherheitsrelevante Bedienungen der technischen Anlage über das mobile Bedien- und Beobachtungsgerät nur dann aktivieren, wenn die Lokalisierungsmittel detektieren, dass sich das mobile Bedien- und Beobachtungsgerät innerhalb des aktiven Bereichs befindet,
**dadurch gekennzeichnet, dass** die Sendemittel (150) und Empfangsmittel (150) des mobilen Bedien- und Beobachtungsgeräts zum Senden und Empfangen von Radarsignalen ausgebildet sind und die technische Anlage (104) mindestens ein Reflektormodul (108, 110, 112) zur Reflexion der Radarsignalen aufweist.

2. HMI System nach Anspruch 1, wobei die Sendemittel (150) und Empfangsmittel (150) zur Lokalisierung des mobilen Bedien- und Beobachtungsgeräts (106) als frequenzmodulierendes Dauerstrich Radarsystem ausgebildet sind.

3. HMI System nach einem der Ansprüche 1 oder 2, wobei das mindestens eine Reflektormodul (108, 110, 112) zum Empfangen von Radarsignalen, zum modulieren von empfangenen Radarsignalen und zum Senden von modulierten Radarsignalen ausgebildet ist.

4. HMI System nach Anspruch 3, wobei das mindestens eine Reflektormodul (108, 110, 112) zur Modulation von Radarsignalen ausgebildet ist.

5. HMI System nach einem der Ansprüche 1 bis 4, wobei das mobile Bedien- und Beobachtungsgerät (106) einen Mischer (154) hat, der dazu ausgebildet ist, ein reelles Signal aus einem empfangenen Radarsignal zu erzeugen.

6. HMI System nach einem der Ansprüche 1 bis 5, wobei das mobile Bedien- und Beobachtungsgerät (106) eine Analyseeinheit (166) hat, die zur Bestimmung eines Abstands zur technischen Anlage (104) mittels Frequenzanalyse des empfangenen Radarsignals ausgebildet ist.

7. HMI System nach einem der Ansprüche 1 bis 6, wobei das mindestens eine Reflektormodul (108, 110, 112) zum Senden von Identifizierungsdaten ausgebildet ist und das mobile Bedien- und Beobachtungsgerät (106) zur Identifizierung des mindestens einen Reflektormoduls (108, 110, 112) mittels empfangener Identifizierungsdaten ausgebildet ist.

8. HMI System nach einem der Ansprüche 1 bis 6, wobei das mobile Bedien- und Beobachtungsgerät Mittel zur Analog- Digitalkonvertierung (158) empfangener Radar Signale hat und wobei empfangene Radarsignale mittels eines Begrenzerverstärkers in eine binäre Signalfolge überführbar sind.

9. Mobiles Bedien- und Beobachtungsgerät (106) für Automatisierungskomponenten (102) einer technischen Anlage (104), wobei die technische Anlage mindestens ein Reflektormodul (108, 110, 112) zur Reflexion von Radarsignalen aufweist, wobei das Bedien- und Beobachtungsgerät (106) ausgestaltet ist mit
- Mitteln zur berührungslosen Datenübertragung zwischen dem mobilen Bedien- und Beobachtungsgerät (106) und den Automatisierungskomponenten (102),
- Sendemitteln (150) und Empfangsmitteln (150) zur drahtlosen Lokalisierung des mobilen Bedien- und Beobachtungsgeräts,
- Auswertemitteln zur Verwaltung eines aktiven Bedienbereichs, welche die Automatisierungskomponenten für sicherheitsrelevante Bedienungen der technischen Anlage über das mobile Bedien- und Beobachtungsgerät nur dann aktivieren, wenn die Lokalisierungsmittel detektieren, dass sich das mobile Bedien- und Beobachtungsgerät innerhalb des aktiven Bereichs befindet,
wobei das Bedien- und Beobachtungsgerät **dadurch gekennzeichnet ist, dass** die Sendemittel (150) und Empfangsmittel (150) des mobilen Bedien- und Beobachtungsgeräts zum Senden der Radarsignale und zum Empfangen der von dem mindestens einen Reflektormodul der Anlage reflektierten Radarsignale ausgebildet sind.

10. Mobiles Bedien- und Beobachtungsgerät (106) nach Anspruch 9, wobei die Sendemittel und Empfangsmittel zur Lokalisierung der mobilen Bedien- und Beobachtungsgeräts als frequenzmodulierendes Dauerstrich Radarsystem ausgebildet sind.

11. Mobiles Bedien- und Beobachtungsgerät nach Anspruch 9 oder 10 mit einem Mischer (154), der dazu ausgebildet ist, ein reelles Signal aus einem empfangenen Radarsignal zu erzeugen.

12. Mobiles Bedien- und Beobachtungsgerät nach einem der Ansprüche 9 bis 11 mit Mittel zur Analog- Digitalkonvertierung (158) empfangener Radar Signale, wobei die Mittel zur Analog-Digitalkonvertierung einen Begrenzerverstärker aufweisen.

## Claims

1. HMI system with at least one mobile operating and monitoring device (106) for automation components (102) of a technical installation (104) and with
- resources for contactless data transmission between the mobile operating and monitoring device and the automation components,
- resources for locating the mobile operating and monitoring device, the mobile operating and monitoring device having transmit resources and receive resources for wireless location,
- evaluation resources for managing an active operational area, which only activate the automation components for safety-related operations of the technical installation by way of the mobile operating and monitoring device, when the location resources detect that the mobile operating and monitoring device is within the active area,
**characterised in that** the transmit resources (150) and receive resources (150) of the mobile operating and monitoring device are embodied to transmit and receive radar signals and the technical installation (104) features at least one reflector module (108, 110, 112) to reflect the radar signals.

2. HMI system according to claim 1, with the transmit resources (150) and receive resources (150) for locating the mobile operating and monitoring device (106) being embodied as a frequency-modulating continuous wave radar system.

3. HMI system according to one of claims 1 or 2, with the at least one reflector module (108, 110, 112) being embodied to receive radar signals, to modulate received radar signals and to transmit modulated radar signals.

4. HMI system according to claim 3, with the at least one reflector module (108, 110, 112) being embodied to modulate radar signals.

5. HMI system according to one of claims 1 to 4, with the mobile operating and monitoring device (106) having a mixer (154), which is embodied to generate a real signal from a received radar signal.

6. HMI system according to one of claims 1 to 5, with the mobile operating and monitoring device (106) having an analysis unit (166), which is embodied to determine a distance from the technical installation (104) by means of a frequency analysis of the received radar signal.

7. HMI system according to one of claims 1 to 6, with the at least one reflector module (108, 110, 112) being embodied to transmit identification data and the mobile operating and monitoring device (106) being embodied to identify the at least one reflector module (108, 110, 112) by means of received identification data.

8. HMI system according to one of claims 1 to 6, with the mobile operating and monitoring device having resources for the analogue-digital conversion (158) of received radar signals, it being possible to convert received radar signals to a binary signal sequence by means of a limiter-amplifier.

9. Mobile operating and monitoring device (106) for automation components (102) of a technical installation (104), with the technical installation featuring at least one reflector module (108, 110, 112) to reflect radar signals, with the operating and monitoring device (106) being equipped with
- resources for contactless data transmission between the mobile operating and monitoring device (106) and the automation components (102),
- transmit resources (150) and receive resources (150) for the wireless location of the mobile operating and monitoring device,
- evaluation resources for managing an active operational area, which only activate the automation components for safety-related operations of the technical installation by way of the mobile operating and monitoring device, when the location resources detect that the mobile operating and monitoring device is within the active area,
with the operating and monitoring device being **characterised in that** the transmit resources (150) and receive resources (150) of the mobile operating and monitoring device are embodied to transmit radar signals and to receive the radar signals reflected by the at least one reflector module of the installation.

10. Mobile operating and monitoring device (106) according to claim 9, with the transmit resources and receive resources for locating the mobile operating and monitoring device being embodied as a frequency-modulating continuous wave radar system.

11. Mobile operating and monitoring device (106) according to claim 9 or 10 with a mixer (154), which is embodied to generate a real signal from a received radar signal.

12. Mobile operating and monitoring device (106) according to one of claims 9 to 11 with resources for the analogue-digital conversion (158) of received radar signals, with the resources for analogue-digital conversion featuring a limiter-amplifier.

## Revendications

1. Système d'interface homme - machine avec au moins un appareil mobile de commande et d'observation (106) pour des composants d'automatisation (102) d'une installation technique (104) et comprend :
- des moyens pour la transmission de données sans contact entre l'appareil mobile de commande et d'observation et les composants d'automatisation,
- des moyens pour la localisation de l'appareil mobile de commande et d'observation, l'appareil mobile de commande et d'observation ayant des moyens d'émission et des moyens de réception pour la localisation sans fil,
- des moyens d'évaluation qui sont destinés à la gestion d'une zone de commande active et qui n'activent les composants d'automatisation pour des commandes à sécurité critique de l'installation technique par l'intermédiaire de l'appareil mobile de commande et d'observation que si les moyens de localisation détectent que l'appareil mobile de commande et d'observation se trouve à l'intérieur de la zone active,
**caractérisé par le fait que** les moyens d'émission (150) et les moyens de réception (150) de l'appareil mobile de commande et d'observation sont conçus pour l'émission et la réception de signaux radars et que l'installation technique (104) comporte au moins un module réflecteur (108, 110, 112) pour la réflexion des signaux radars.

2. Système d'interface homme - machine selon la revendication 1, dans lequel les moyens d'émission (150) et les moyens de réception (150) pour la localisation de l'appareil mobile de commande et d'observation (106) sont conçus comme un système radar à ondes entretenues et à modulation de fréquence.

3. Système d'interface homme - machine selon l'une des revendications 1 ou 2, dans lequel le ou les modules réflecteurs (108, 110, 112) sont conçus pour la réception de signaux radars, pour la modulation de signaux radars reçus et pour l'émission de signaux radars modulés.

4. Système d'interface homme - machine selon la revendication 3, dans lequel le ou les modules réflecteurs (108, 110, 112) sont conçus pour la modulation de signaux radars.

5. Système d'interface homme - machine selon l'une des revendications 1 à 4, dans lequel l'appareil mobile de commande et d'observation (106) comporte un mélangeur (154) qui est conçu pour produire un signal réel à partir d'un signal radar reçu.

6. Système d'interface homme - machine selon l'une des revendications 1 à 5, dans lequel l'appareil mobile de commande et d'observation (106) comporte une unité d'analyse (166) qui est conçue pour la détermination d'une distance à l'installation technique (104) au moyen d'une analyse de fréquence du signal radar reçu.

7. Système d'interface homme - machine selon l'une des revendications 1 à 6, dans lequel le ou les modules réflecteurs (108, 110, 112) sont conçus pour l'émission de données d'identification et dans lequel l'appareil mobile de commande et d'observation (106) est conçu pour l'identification du ou des modules réflecteurs (108, 110, 112) au moyen de données d'identification reçues.

8. Système d'interface homme - machine selon l'une des revendications 1 à 6, dans lequel l'appareil mobile de commande et d'observation comporte des moyens pour la conversion analogique - numérique (158) de signaux radars reçus et dans lequel des signaux radars reçus peuvent être transformés au moyen d'un amplificateur limiteur en une séquence de signal binaire.

9. Appareil mobile de commande et d'observation (106) pour des composants d'automatisation (102) d'une installation technique (104), l'installation technique comportant au moins un module réflecteur (108, 110, 112) pour la réflexion de signaux radars et l'appareil mobile de commande et d'observation (106) étant conçu avec :
- des moyens pour la transmission de données sans contact entre l'appareil mobile de commande et d'observation (106) et les composants d'automatisation (102),
- des moyens d'émission (150) et des moyens de réception (150) pour la localisation sans fil de l'appareil mobile de commande et d'observation,
- des moyens d'évaluation qui sont destinés à la gestion d'une zone de commande active et qui n'activent les composants d'automatisation pour des commandes à sécurité critique de l'installation technique par l'intermédiaire de l'appareil mobile de commande et d'observation que si les moyens de localisation détectent que l'appareil mobile de commande et d'observation se trouve à l'intérieur de la zone active,
l'appareil mobile de commande et d'observation étant **caractérisé par le fait que** les moyens d'émission (150) et les moyens de réception (150) de l'appareil mobile de commande et d'observation sont conçus pour l'émission des signaux radars et pour la réception des signaux radars réfléchis par le ou les modules réflecteurs de l'installation.

10. Appareil mobile de commande et d'observation (106) selon la revendication 9, dans lequel les moyens d'émission et les moyens de réception pour la localisation de l'appareil mobile de commande et d'observation sont conçus comme un système radar à ondes entretenues et à modulation de fréquence.

11. Appareil mobile de commande et d'observation selon la revendication 9 ou 10, avec un mélangeur (154) qui est conçu pour produire un signal réel à partir d'un signal radar reçu.

12. Appareil mobile de commande et d'observation selon l'une des revendications 9 à 11, avec des moyens pour la conversion analogique - numérique (158) de signaux radars reçus, les moyens pour la conversion analogique - numérique comportant un amplificateur limiteur.
